# FASCICULE DE BREVET EUROPEEN

(11) **EP 0 598 653 B1**
(45) Date de publication et mention de la délivrance du brevet: **04.06.1997**
(21) Numéro de dépôt: 93402766.5
(22) Date de dépôt: 15.11.1993
(51) Int. Cl.: B60S 1/40

(54) **Pièce de raccordement pour relier l'extrémité d'un bras d'essuie-glace à un axe d'articulation d'un balai d'essuie-glace**
Halterung zur Befestigung des freien Endes eines Scheibenwischers an den Gelenkbolzen eines Wischblatts
Connector for attaching the end of a windscreen wiper arm to the articulation pin of a windscreen wiper blade

(30) Priorité: 16.11.1992 FR 9213748
(43) Date de publication de la demande: 25.05.1994
(73) Titulaire: VALEO SYSTEMES D'ESSUYAGE, 78180 Montigny-Le-Bretonneux (FR)
(72) Inventeur: Schön, Wilfried, F-63580 St. Etienne/Usson (FR)
(74) Mandataire: Gamonal, Didier

(56) Documents cités:
- EP-A- 0 528 307
- DE-A- 3 842 955
- FR-A- 2 372 719
- FR-A- 2 501 135
- FR-A- 2 659 614

## Description

La présente invention concerne une pièce de raccordement, également appelée connecteur, en forme de pince élastique pour relier l'extrémité d'un bras d'essuie-glace à un élément d'une structure de support de la lame d'essuyage du balai d'essuie-glace.

L'invention concerne plus particulièrement une pièce de raccordement pour relier l'extrémité en forme de crochet du bras d'essuie-glace à un axe d'articulation d'un élément de support de la lame d'essuyage.

On connaît un tel type de pièce de raccordement associée à une extrémité en forme de crochet qui, en section par un plan longitudinal présente une forme de U, la pièce comportant deux joues latérales parallèles dont les faces externes sont prévues pour être reçues entre les faces internes des ailes latérales de l'élément de structure et dont les faces internes en vis-à-vis sont prévues pour coopérer avec les bords latéraux parallèles du crochet d'extrémité du bras d'essuie-glace.

Les deux joues parallèles de la pièce de raccordement sont reliées entre elles par une paire de branches longitudinales sensiblement parallèles dont les faces internes en vis-à-vis comportent chacune une portion de palier prévue pour entourer partiellement l'axe d'articulation et délimiter ainsi un logement de palier dans lequel l'axe d'articulation peut être introduit radialement entre les branches parallèles par déformation élastique de la pièce de raccordement.

Les branches parallèles qui s'étendent entre les joues latérales sont reliées entre elles par une branche intermédiaire, ou branche centrale, qui s'étend en regard du fond du logement de palier et qui confère une partie de son élasticité à la pince élastique ainsi réalisée, les faces en vis-à-vis délimitant en outre entre elles un second logement de palier dans lequel l'axe d'articulation peut être introduit radialement entre les branches.

Avec un tel type de pièce de raccordement, l'axe d'articulation est introduit entre les faces internes des branches longitudinales par une extrémité de la pièce de raccordement et est emboîté élastiquement dans son logement de palier.

Afin de rationaliser la production en grande série des essuie-glaces tout en standardisant le plus grand nombre de pièces, il a déjà été proposé de réaliser une pièce de raccordement comportant deux logements de palier agencés longitudinalement successivement l'un à côté de l'autre entre les branches longitudinales parallèles, tel que celle décrite dans le document FR-A-2 372 719.

Outre la position longitudinale du logement de palier, qui permet de s'adapter à différents types de crochets d'extrémité et/ou d'éléments de structure de support de la lame d'essuyage, chaque logement de palier peut être d'un diamètre différent afin de permettre d'utiliser la même pièce de raccordement pour relier l'extrémité du bras d'essuie-glace à des axes d'articulation de diamètres différents.

Dans cette conception connue par le document précité, les deux logements de palier sont agencés d'un même côté de la branche intermédiaire, cette dernière s'étendant au voisinage de l'une des extrémités longitudinales de la pièce de raccordement et étant reçue dans la branche centrale recourbée du crochet du bras d'essuie-glace.

Cet agencement n'est pas satisfaisant dans la mesure où l'élasticité que doit posséder la pince élastique afin d'une part de permettre la mise en place d'un axe d'articulation dans l'un ou l'autre des deux logements de palier et, d'autre part, de permettre son déverrouillage par rapprochement des branches longitudinales, hors de l'extrémité en forme de crochet du bras d'essuie-glace, aboutit à fragiliser la pièce de raccordement dont la solidité devient alors insuffisante.

Afin de remédier à ces inconvénients, la présente invention propose une pièce de raccordement en forme de pince élastique pour relier l'extrémité en forme de crochet d'un bras d'essuie-glace à un axe d'articulation d'un élément de structure de support de la lame d'essuyage d'un balai d'essuie-glace, du type comportant une paire de branches longitudinales sensiblement parallèles dont les faces internes en vis-à-vis comportent chacune une portion de palier prévue pour entourer partiellement l'axe d'articulation et délimiter un logement de palier dans lequel l'axe d'articulation peut être introduit radialement, entre les branches parallèles, par déformation élastique de la pièce de raccordement, et qui sont reliées entre elles par une branche intermédiaire qui s'étend en regard du fond du logement de palier, les faces en vis-à-vis des branches délimitant entre elles un second logement de palier dans lequel l'axe d'articulation peut être introduit radialement entre les branches (Pièce de raccordement telle que divulguée dans FR-A-2 372 719), caractérisée en ce que les deux logements de palier sont agencés longitudinalement de part et d'autre de la branche intermédiaire.

Selon divers modes de réalisation de l'invention :
- le second logement de palier est agencé à proximité de l'extrémité de la pièce de raccordement prévue pour être reçue à l'intérieur de la portion recourbée du crochet d'extrémité du bras ;
- la face correspondante de la branche intermédiaire comporte une portion de palier qui prolonge les deux portions de palier formées dans les faces internes en vis-à-vis des branches longitudinales pour délimiter un logement de palier comportant une encoche d'introduction de l'axe d'articulation qui est ouverte dans la direction opposée à la branche intermédiaire ;
- le premier logement de palier est agencé à distance de la face correspondante de la branche intermédiaire et les deux portions de palier formées dans les faces internes en vis-à-vis des branches longitudinales délimitent une encoche d'introduction de l'axe d'articulation qui est ouverte dans la direction opposée à la branche intermédiaire ;
- l'encoche d'introduction comporte des rampes d'introduction de l'axe d'articulation ;
- l'une au moins des branches longitudinales comporte deux fentes longitudinales parallèles qui délimitent entre elles une lame centrale dont la face externe comporte un bec de verrouillage en saillie prévu pour être reçu dans un trou complémentaire formé dans le crochet d'extrémité du bras d'essuie-glace ;
- les fentes longitudinales s'étendent dans la portion d'extrémité de la branche longitudinale qui s'étend au-delà du premier logement de palier dans la direction opposée à la branche intermédiaire ;
- l'extrémité libre de la lame centrale comporte une patte de commande permettant d'exercer sur la lame un effort de déverrouillage susceptible de la faire fléchir en direction de l'autre branche ;
- la portion de palier du premier logement de palier formée dans la face interne de l'une des deux branches longitudinales s'étend transversalement sur toute la largeur de la branche ;
- la portion de palier du premier logement de palier formée dans la face interne de l'autre des deux branches longitudinales s'étend transversalement sur une partie de la largeur de la branche sous la forme de deux tronçons adjacents aux faces internes en vis-à-vis des joues latérales ;
- chacune des deux portions de palier du second logement de palier formées dans les faces internes des deux branches longitudinales s'étend transversalement sur toute la largeur de la branche correspondante ;
- la portion d'extrémité libre de l'une des branches longitudinales qui s'étend au-delà du second logement de palier dans la direction opposée à la branche intermédiaire, comporte deux fentes longitudinales parallèles ;
- les diamètres des deux logements de palier sont égaux ;
- les diamètres des deux logements de palier sont différents.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe longitudinale, selon la ligne 1-1 de la figure 2, d'un exemple de réalisation d'une pièce de raccordement réalisée conformément aux enseignements de l'invention ;
- la figure 2 est une vue de dessus de la pièce de raccordement illustrée à la figure 1 ;
- la figure 3 est une vue partielle en section selon la ligne 3-3 de la figure 2 ;
- la figure 4 est une vue latérale de droite de la pièce de raccordement illustrée à la figure 1 ; et
- la figure 5 est une vue partielle de dessous de la pièce de raccordement illustrée à la figure 1.

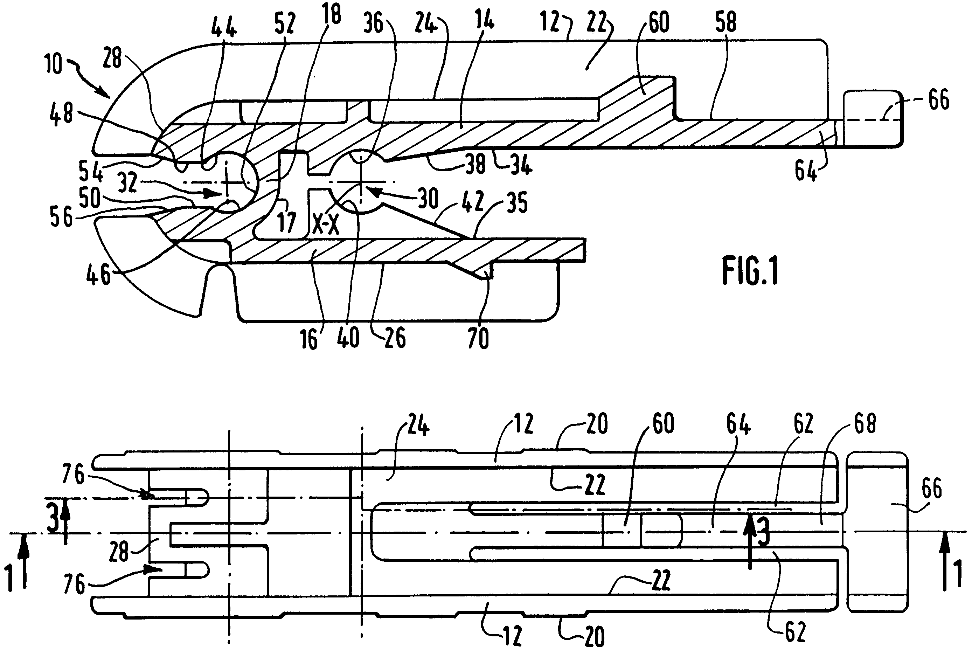

La pièce de raccordement 10 illustrée sur les figures est une pièce moulée en matière plastique et présente une forme générale de pince élastique analogue à une pince à linge, et est constituée pour l'essentiel par deux joues latérales parallèles 12 qui sont reliées entre elles par deux branches longitudinales supérieure 14 et inférieure 16 (en considérant la figure 1) et par une branche intermédiaire 18, ou branche centrale qui relie entre elles les branches 14 et 16 et qui s'étend sensiblement dans un plan vertical perpendiculaire aux branches parallèles 14 et 16.

Selon un agencement connu, les faces externes 20 des joues latérales 12 sont prévues pour être reçues, lors de l'assemblage, entre les faces internes en vis-à-vis d'un élément de structure de support de balai d'essuie-glace (non représenté), tel que par exemple un étrier principal du balai d'essuie-glace.

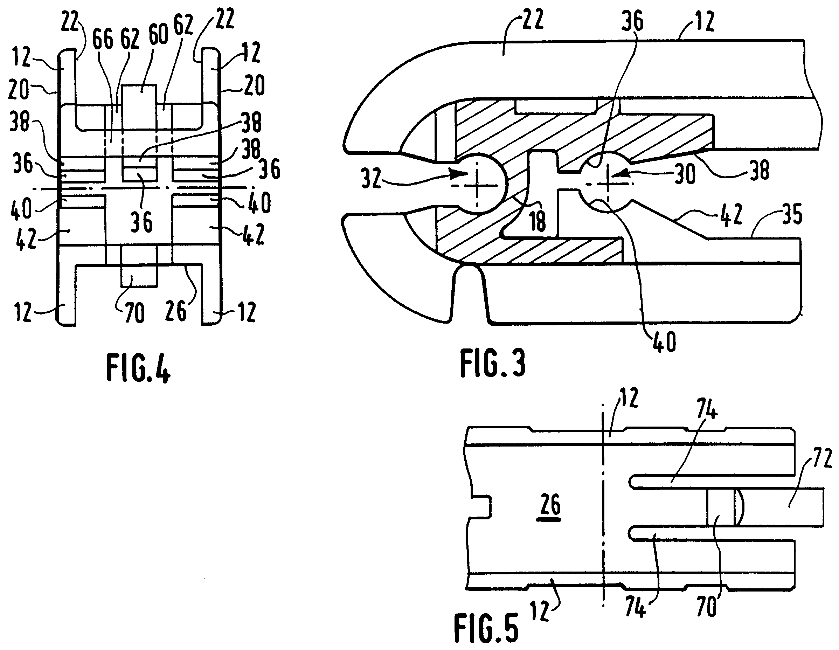

La silhouette générale de la pièce de raccordement telle qu'elle est illustrée aux figures 1 et 3 est en forme de U allongé et correspond sensiblement au contour d'une extrémité en forme de crochet (non représentée) d'un bras d'essuie-glace dont les branches principales et la branche centrale coudée sont délimitées latéralament par des bords parallèles qui sont reçus entre les faces internes 22 des joues latérales 12.

Les faces internes des branches de l'extrémité en forme de crochet du bras d'essuie-glace entourent en les épousant intimement les faces externes 24 et 26 des branches longitudinales 14 et 16 de la pièce de raccordement 10, ainsi que la portion d'extrémité convexe sensiblement cylindrique 28 de manière que l'ensemble du crochet soit reçu entre les joues latérales 12.

Conformément à l'invention, la pièce de raccordement 10 possède deux logements de palier 30 et 32 agencés longitudinalement de part et d'autre de la branche intermédiaire 18.

Le premier logement de palier 30, également appelé par convention logement arrière, est agencé entre les faces internes 34 et 35 des portions arrière des branches longitudinales parallèles 14 et 16 qui s'étendent longitudinalement, vers la droite en considérant la figure 1, depuis la branche intermédiaire 18.

A cet effet, la face interne 34 comporte une portion cylindrique concave de palier 36, qui s'étend sur toute la largeur de la branche 14 et qui est reliée à la face interne plane 34 par une rampe inclinée 38.

La face interne 35 comporte une portion cylindrique concave de palier 40 à laquelle elle est reliée par une rampe inclinée 42.

Comme on peut le voir sur les figures 1, 3 et 4, la portion de palier 40 et la portion de rampe correspondante 42 sont réalisées sous la forme de deux tronçons qui s'étendent l'un vers l'autre vers l'intérieur à partir des joues latérales 12.

La disposition des rampes 38 et 42 qui débouchent dans le premier logement de palier 30 définit une encoche pour l'introduction d'un axe d'articulation (non représenté) dans le logement de palier arrière 30 par introduction de l'axe selon une direction radiale sensiblement parallèle aux faces internes 34 et 35 par déformation élastique de la pince tendant à écarter légèrement les branches longitudinales 14 et 16.

L'axe X-X du logement de palier arrière 30 est agencé à distance de la face en vis-à-vis 17 de la branche intermédiaire 18 de manière à conférer la plus grande élasticité possible à la pièce de raccordement.

Le second logement de palier 32, également appelé par convention logement avant, est constitué par deux portions de surfaces cylindriques concaves de palier 44 et 46 formées respectivement dans les faces internes en vis-à-vis 48 et 50 des portions des branches longitudinales parallèles 14 et 16 qui s'étendent vers l'avant, vers la gauche en considérant la figure 1, au-delà de la branche intermédiaire 18.

Le logement de palier avant 32 est complété par une portion cylindrique concave de fond 52 formée dans la face en vis-à-vis de la branche intermédiaire 18 de manière à constituer un logement de palier cylindrique concave qui s'étend sensiblement sur trois quarts de la circonférence.

Les faces internes 48 et 50 comportent également chacune une rampe d'introduction 54, 56 respectivement.

Un axe d'articulation peut ainsi être introduit dans l'encoche d'introduction délimitée par les rampes 54 et 56, à l'intérieur du logement avant 32 en déformant élastiquement la pièce de raccordement 10 de manière à écarter légèrement les branches 14 et 16.

Pour permettre l'introduction transversale d'un axe d'articulation dans l'un ou l'autre des logements de palier 30 ou 32, les parties centrales des joues latérales 12 sont bien entendu évidées.

La pièce de raccordement 10 comporte également des moyens pour son verrouillage longitudinal en position dans l'extrémité en forme de crochet d'un bras d'essuie-glace.

A cet effet, la face externe 58 de la branche longitudinale supérieure 14 comporte un bec de verrouillage 60 qui fait saillie vers l'extérieur et qui est prévu pour être reçu dans un logement de verrouillage correspondant formé dans la face interne en vis-à-vis du crochet du bras d'essuie-glace (non représenté).

La branche supérieure 14 comporte, dans sa partie arrière qui s'étend longitudinalement vers la droite en considérant la figure 1, deux fentes longitudinales parallèles 62 qui délimitent une lame centrale 64 sur laquelle est formé le bec de verrouillage 60.

La lame centrale 64 possède ainsi une grande élasticité et il est possible de la fléchir selon une direction tendant à la rapprocher de la branche 16, en vue de permettre le déverrouillage du bec 60, en agissant sur une patte de commande 66 réalisée venue de moulage et formée à l'extrémité libre arrière 68 de la lame centrale 64.

De la même manière, la face externe 26 de la branche longitudinale inférieure 16 comporte un bec de verrouillage 70 qui est formé sur une lame centrale 72 délimitée par deux fentes longitudinales parallèles 74.

Afin d'accroître l'élasticité de la partie avant de la pièce de raccordement 10, les portions avant des branches longitudinales 14 et 16 comportent également chacune deux fentes longitudinales 76.

Dans le mode de réalisation illustré sur les figures, les deux logements de palier 30 et 32 ont des diamètres sensiblement identiques mais ils pourraient être nettement différents afin de permettre indifféremment l'utilisation de la même pièce de raccordement 10 pour relier une extrémité en forme de crochet standard sur des balai d'essuie-glace possédant des diamètres d'axe d'articulation différents.

## Revendications

1. Pièce (10) de raccordement en forme de pince élastique pour relier l'extrémité en forme de crochet d'un bras d'essuie-glace à un axe d'articulation d'un élément de structure de support de la lame d'essuyage d'un balai d'essuie-glace , du type comportant une paire de branches longitudinales (14, 16) sensiblement parallèles dont les faces internes en vis-à-vis (34, 35, 48, 50) comportent chacune une portion de palier (36, 40) prévue pour entourer partiellement l'axe d'articulation et délimiter un logement de palier (30) dans lequel l'axe d'articulation peut être introduit radialement, entre les branches parallèles (14, 16), par déformation élastique de la pièce de raccordement, et qui sont reliées entre elles (14, 16) par une branche intermédiaire (18) qui s'étend en regard du fond du logement de palier, les faces en vis-à-vis (48, 50) des branches (14, 16) délimitant entre elles un second logement de palier (32) dans lequel l'axe d'articulation peut être introduit radialement entre les branches, caractérisée en ce que les deux logements de palier (30, 32) sont agencés longitudinalement de part et d'autre de la branche intermédiaire (18).

2. Pièce de raccordement selon la revendication 1, caractérisée en ce que le second logement de palier (32) est agencé à proximité de l'extrémité de la pièce de raccordement prévue pour être reçue à l'intérieur de la portion recourbée du crochet d'extrémité du bras d'essuie-glace.

3. Pièce de raccordement selon l'une des revendications 1 ou 2, caractérisée en ce que la face correspondante de la branche intermédiaire (18) comporte une portion de palier (52) qui prolonge les deux portions de palier (44, 46) formées dans les faces internes en vis-à-vis (48, 50) des branches longitudinales (14, 16) pour délimiter un logement de palier (32) comportant une encoche d'introduction de l'axe d'articulation qui est ouverte dans la direction opposée à la branche intermédiaire (18).

4. Pièce de raccordement selon l'une des revendications 2 ou 3, caractérisée en ce que le premier logement de palier (30) est agencé à distance de la face correspondante (17) de la branche intermédiaire (18) et les deux portions de palier (36, 40) formées dans les faces internes en vis-à-vis des branches longitudinales (14, 16) délimitent une encoche d'introduction de l'axe d'articulation qui est ouverte dans la direction opposée à la branche intermédiaire (18).

5. Pièce de raccordement selon l'une des revendications 3 ou 4, caractérisée en ce que l'encoche d'introduction comporte des rampes d'introduction (38, 42, 54, 56) de l'axe d'articulation.

6. Pièce de raccordement selon l'une quelconque des revendications précédentes, caractérisée en ce que l'une au moins des branches longitudinales (14, 16) comporte deux fentes longitudinales parallèles (62, 74) qui délimitent entre elles une lame centrale (64) dont la face externe (58, 26) comporte un bec de verrouillage (60, 70) en saillie prévu pour être reçu dans un trou complémentaire formé dans le crochet d'extrémité du bras d'essuie-glace.

7. Pièce de raccordement selon la revendication 6, caractérisée en ce que les fentes longitudinales (62, 74) s'étendent dans la portion d'extrémité libre de la branche longitudinale (14, 16) qui s'étend au-delà du premier logement (30) dans la direction opposée à la branche intermédiaire (18).

8. Pièce de raccordement selon la revendication 7, caractérisée en ce que l'extrémité libre (68) de la lame centrale (64) comporte une patte (66) de commande permettant d'exercer sur la lame (64) un effort de déverrouillage susceptible de la faire fléchir en direction de l'autre branche (16).

9. Pièce de raccordement selon la revendication 4, caractérisée en ce que la portion de palier (36) du premier logement de palier (30) formée dans la face interne (34) de l'une (14) des deux branches longitudinales s'étend transversalement sur toute la largeur de la branche.

10. Pièce de raccordement selon la revendication 9, caractérisée en ce que la portion de palier (40) du premier logement de palier (30) formée dans la face interne (35) de l'autre (16) des deux branches longitudinales s'étend transversalement sur une partie de la largeur de la branche (16) sous la forme de deux tronçons adjacents aux faces internes en vis-à-vis (22) des joues latérales.

11. Pièce de raccordement selon l'une des revendications 2 ou 3, caractérisée en ce que chacune des deux portions de palier (44, 46) du second logement de palier (32) formées dans les faces internes (48, 50) des deux branches longitudinales s'étend transversalement sur toute la largeur de la branche correspondante.

12. Pièce de raccordement selon l'une des revendications 2 ou 3, caractérisée en ce que la portion d'extrémité libre de l'une des branches longitudinales qui s'étend au-delà du second logement de palier (32) dans la direction opposée à la branche intermédiaire (18), comporte deux fentes longitudinales parallèles (76).

13. Pièce de raccordement selon l'une quelconque des revendications précédentes, caractérisée en ce que les diamètres des deux logements de palier (30, 32) sont égaux.

14. Pièce de raccordement selon l'une quelconque des revendications 1 à 12, caractérisée en ce que les diamètres des deux logements de palier (30, 32) sont différents.

## Claims

1. Connecting piece (10) in the form of an elastic grip for connecting the hook-shaped end of a wiper arm to an articulation pin of a structure element supporting the wiper blade of a windscreen wiper, of the type having a pair of substantially parallel longitudinal legs (14, 16), the opposite internal faces (34, 35, 48, 50)of which each have a bearing portion (36, 40) designed to partially surround the articulation pin and delimit a bearing housing (30) in which the articulation pin can be inserted radially, between the parallel legs (14, 16), by elastic deformation of the connecting piece, and which are connected together (14, 16) by an intermediate leg (18) which extends opposite the base of the bearing housing, the opposite faces (48, 50) of the legs (14, 16) delimiting between them a second bearing housing (32) in which the articulation pin can be inserted radially between the legs, characterised in that the two bearing housings (30, 32) are arranged longitudinally on each side of the intermediate leg (18).

2. Connecting piece according to Claim 1, characterised in that the second bearing housing (32) is arranged in the vicinity of the end of the connecting piece designed to be received inside the curved position of the end hook on the wiper arm.

3. Connecting piece according to one of Claims 1 or 2, characterised in that the corresponding face of the intermediate leg (18) has a bearing portion (52) which extends the two bearing portions (44, 46) formed in the opposite internal faces (48, 50) of the longitudinal legs (14, 16) in order to delimit a bearing housing (32) having a recess for inserting the articulation pin which is open in the direction opposite to th e intermediate leg (18).

4. Connecting piece according to one of Claims 2 or 3, characterised in that the first bearing housing (30) is arranged at a distance from the corresponding face (17) of the intermediate leg (18) and the two bearing portions (36, 40) formed in the opposite internal faces of the longitudinal legs (14, 16) delimit a recess for inserting the articulation pin which is open in the direction opposite to the intermediate leg (18).

5. Connecting piece according to one of Claims 3 or 4, characterised in that the insertion recess has ramps (38, 42, 54, 56) for insertion of the articulation pin.

6. Connecting piece according to any one of the preceding claims, characterised in that at least one of the longitudinal legs (14, 16) has two parallel longitudinal slots (62, 74) which delimit between them a central blade (64) whose external face (58, 26) has a projecting locking beak (60, 70) designed to be received in a complementary hole formed in the end hook of the wiper arm.

7. Connecting piece according to Claim 6, characterised in that the longitudinal slots (62, 74) extend in the free end portion of the longitudinal leg (14, 16) which extends beyond the first housing (30) in the oposite direction to the intermediate leg (18).

8. Connecting piece according to Claim 7, characterised in that the free end (68) of the central blade (64) has a control lug (66) making it possible to exert on the blade (64) a release force capable of making it flex in the direction of the other leg (16).

9. Connecting piece according to Claim 4, characterised in that the bearing portion (36) of the first bearing housing (30) formed in the internal face (34) of one (14) of the two longitudinal legs extends transversely over the entire width of the leg.

10. Connecting piece according to Claim 9, characterised in that the bearing portion (40) of the first bearing housing (30) formed in the internal face (35) of the other one (16) of the two longitudinal legs extends transversely over part of the width of the leg (16) in the form of two sections adjacent to the opposite internal faces (22) of the side cheeks.

11. Connecting piece according to one of Claims 2 or 3, characterised in that each of the two bearing portions (44, 46) of the second bearing housing (32) formed in the internal faces (48, 50) of the two longitudinal legs extends transversely over the entire width of the corresponding leg.

12. Connecting piece according to one of Claims 2 or 3, characterised in that the free end portion of one of the longitudinal legs, which extends beyond the second bearing housing (32) in the opposite direction to the intermediate leg (18), has two parallel longitudinal slots (76).

13. Connecting piece according to any one of the preceding claims, characterised in that the diameters of the two bearing housings (30, 32) are equal.

14. Connecting piece according to any one of Claims 1 to 12, characterised in that the diameters of the two bearing housings (30, 32) are different.

## Patentansprüche

1. Halterung (10) in Form einer elastischen Klemme zur Befestigung des hakenförmigen Endes eines Scheibenwischerarms an einem Gelenkbolzen eines Tragstrukturelements des Wischgummis eines Wischblatts, mit einem Paar in etwa paralleler Längsschenkel (14, 16), deren gegenüberliegende Innenflächen (34, 35, 48, 50) jeweils einen Lagerabschnitt (36, 40) umfassen, der vorgesehen ist, um den Gelenkbolzen teilweise zu umschließen und eine Lageraufnahme (30) zu begrenzen, in die der Gelenkbolzen radial, zwischen den parallelen Schenkeln (14, 16), durch elastische Verformung der Halterung eingesetzt werden kann, und die untereinander (14, 16) durch einen Zwischenschenkel (18) verbunden sind, der sich gegenüber dem Boden der Lageraufnahme erstreckt, wobei die gegenüberliegenden Flächen (48, 50) der Schenkel (14, 16) zusammen eine zweite Lageraufnahme (13) begrenzen, in die der Gelenkbolzen radial zwischen den Schenkeln eingesetzt werden kann , **dadurch gekennzeichnet,** daß die beiden Lageraufnahmen (30, 32) in Längsrichtung beiderseits des Zwischenschenkels (18) angeordnet sind.

2. Halterung nach Anspruch 1 , **dadurch gekennzeichnet,** daß die zweite Lageraufnahme (32) in der Nähe des Endes der Halterung angeordnet ist, das für das Einsetzen im Innern des gekrümmten Abschnitts des Abschlußhakens des Scheibenwischerarms vorgesehen ist.

3. Halterung nach einein der Ansprüche 1 oder 2 , **dadurch gekennzeichnet,** daß die entsprechende Fläche des Zwischenschenkeis (18) einen Lagerabschnitt (52) umfaßt, der die beiden Lagerabschnitte (44, 46) verlängert, die in den gegenüberliegenden Innenflächen (48, 50) der Längsschenkel (14, 16) ausgebildet sind, um eine Lageraufnahme (32) zu begrenzen, die eine Ausklinkung für die Einführung des Gelenkbolzens enthält, die in der dem Zwischenschenkel (18) abgewandten Richtung offen ist.

4. Halterung nach einem der Ansprüche 2 oder 3 , **dadurch gekennzeichnet,** daß die erste Lageraufnahme (30) in einem Abstand von der entsprechenden Fläche (17) des Zwischenschenkels (18) angeordnet ist und die beiden Lagerabschnitte (36, 40), die in den gegenüberliegenden Innenflächen der Längsschenkel (14, 16) ausgebildet sind, eine Ausklinkung für die Einführung des Gelenkbolzens begrenzen, die in der dem Zwischenschenkel (18) abgewandten Richtung offen ist.

5. Halterung nach einem der Ansprüche 3 oder 4 , **dadurch gekennzeichnet,** daß die Einführungsausklinkung Schrägen (38, 42, 54, 56) für die Einführung des Gelenkbolzens umfaßt.

6. Halterung nach einem der vorangehenden Ansprüche, **dadurch gekennzeichnet,** daß mindestens einer der Längsschenkel (14, 16) zwei parallele Längsschlitze (62, 74) enthält, die eine dazwischenliegende Mittelleiste (64) begrenzen, deren Außenfläche (58, 26) eine vorspringende Rastnase (60, 70) umfaßt, die für das Einsetzen in einer formschlüssigen Bohrung vorgesehen ist, die in den Abschlußhaken des Scheibenwischerarms eingearbeitet ist.

7. Halterung nach Anspruch 6 , **dadurch gekennzeichnet,** daß sich die Längsschlitze (62, 74) im freien Endabschnitt des Längsschenkels (14, 16) erstrecken, der sich über die erste Lageraufnahme (30) hinaus in der dem Zwischenschenkel (18) abgewandten Richtung erstreckt.

8. Halterung nach Anspruch 7 , **dadurch gekennzeichnet,** daß das freie Ende (68) der Mittelleiste (64) einen Betätigungsansatz (66) umfaßt, durch den auf die Leiste (64) eine Freigabekraft ausgeübt werden kann, um sie in Richtung des anderen Schenkels (16) zu biegen.

9. Halterung nach Anspruch 4 , **dadurch gekennzeichnet,** daß sich der Lagerabschnitt (36) der ersten Lageraufnahme (30), der in der Innenfläche (34) eines (14) der beiden Längsschenkel ausgebildet ist, in Querrichtung über die gesamte Breite des Schenkels erstreckt.

10. Halterung nach Anspruch 9 , **dadurch gekennzeichnet,** daß sich der Lagerabschnitt (40) der ersten Lageraufnahme (30), der in der Innenfläche (35) des anderen (16) der beiden Längsschenkel ausgebildet ist, in Querrichtung über einen Teil der Breite des Schenkels (16) in Form von zwei Teilstücken erstreckt, die an den gegenüberliegenden Innenflächen (22) der Seitenwände angrenzen.

11. Halterung nach einem der Ansprüche 2 oder 3, **dadurch gekennzeichnet,** daß sich jeder der beiden Lagerabschnitte (44, 46) der zweiten Lageraufnahme (32), die in den Innenflächen (48, 50) der beiden Längsschenkel ausgebildet sind, in Querrichtung über die gesamte Breite des entsprechenden Schenkels erstreckt.

12. Halterung nach einem der Ansprüche 2 oder 3, **dadurch gekennzeichnet,** daß der freie Endabschnitt eines der Längsschenkel, der sich über die zweite Lageraufnahme (32) hinaus in der dem Zwischenschenkel (18) abgewandten Richtung erstreckt, zwei parallele Längsschlitze (76) enthält.

13. Halterung nach einem der vorangehenden Ansprüche, **dadurch gekennzeichnet,** daß die Durchmesser der beiden Lageraufnahmen (30, 32) gleich sind.

14. Halterung nach einem der Ansprüche 1 bis 12, **dadurch gekennzeichnet,** daß die Durchmesser der beiden Lageraufnahmen (30, 32) verschieden sind.
